# FASCICULE DE BREVET EUROPEEN

(11) **EP 4 291 466 B1**
(45) Date de publication et mention de la délivrance du brevet: **08.10.2025**
(21) Numéro de dépôt: 22705417.8
(22) Date de dépôt: 14.01.2022
(51) Int. Cl.: B62D 25/20

(54) **VÉHICULE AUTOMOBILE AVEC AMÉNAGEMENT CÔTÉ TUNNEL CENTRAL POUR BATTERIES DE TRACTION**
KRAFTFAHRZEUG MIT EINER ANORDNUNG ZUR TRAKTIONSBATTERIE AUF DER MITTELTUNNELSEITE
MOTOR VEHICLE WITH AN ARRANGEMENT FOR TRACTION BATTERIES ON THE CENTRAL TUNNEL SIDE

(30) Priorité: 11.02.2021 FR 2101292
(43) Date de publication de la demande: 20.12.2023
(73) Titulaire: Stellantis Auto SAS, 78300 Poissy (FR)
(72) Inventeur: VIRY, Patrick, 25200 Montbeliard (FR); LEGROS, Claire, 78150 Le Chesnay (FR); GROSSET, Romain, 94230 Cachan (FR)
(74) Mandataire: BCIP
(86) Numéro de dépôt international: PCT/FR2022/050085
(87) Numéro de publication internationale: WO 2022/171942

(56) Documents cités:
- DE-A1- 102016 203 210
- JP-U- S61 133 476
- US-A1- 2010 187 864

## Description

### Domaine technique

L'invention a trait au domaine technique des véhicules automobiles, plus particulièrement à la structure de véhicules automobiles.

### Technique antérieure

Le développement des véhicules automobiles à traction électrique, pure ou hybride, connaît un essor important. Ce développement nécessite de loger des accumulateurs d'énergie électrique, plus couramment désignés batteries de traction, sur la structure des véhicules automobiles. Il est courant de loger ces batteries de traction sous le plancher de la structure de véhicule automobile, au moyen d'un caisson. Les batteries de traction ont une masse significative au point de modifier le comportement de la structure du véhicule automobile lors de chocs. En particulier, les tests de choc frontal, notamment contre une barrière mobile déformable avec recouvrement partiel (désignée par l'expression anglo-saxonne « Mobile Progressive Deformable Barrier » suivant la norme EURO-NCAP), et contre une barrière rigide et fixe sur la toute la largeur du véhicule (désignée par l'expression anglo-saxonne « Full Width Rigid Barrier » suivant la norme EURO-NCAP), imposent des contraintes de déformation importantes au niveau des deux poutres longitudinales s'étendant depuis le compartiment moteur jusque sous le plancher et couramment désignées brancards. La masse ajoutée par un caisson de batteries de traction sous le plancher dégrade le comportement en cas de test de choc frontal. De plus, la position des brancards sous le plancher n'est pas favorable au placement des batteries de traction en ce qu'il est souhaitable de placer les batteries de traction directement sous le plancher.

Le document de brevet publié US 2010/0187864 A1 propose une structure de véhicule automobile avec un renfort du tunnel central destiné à améliorer le comportement en cas de test de choc frontal avec faible recouvrement. Le renfort est situé à l'avant sous le plancher et comprend une structure tubulaire s'étendant essentiellement transversalement et ancrée à des profilés longitudinaux sur le plancher le long du tunnel central. Cette solution est essentiellement destinée à limiter l'intrusion du moteur dans l'habitacle via le tunnel central. Elle n'est pas destinée à des véhicules alourdis par des batteries de traction et aborde encore moins la problématique de l'emplacement de telles batteries de traction.
Le document DE 10 2016 203210 A1 divulgue un véhicule selon le préambule de la revendication 1.

### Exposé de l'invention

L'invention a pour objectif de pallier au moins un des inconvénients de l'état de la technique susmentionné. Plus particulièrement, l'invention a pour objectif de proposer une structure de véhicule qui soit compatible aux tests de choc frontal en présence de batteries de traction sous le plancher et qui favorise le placement desdites batteries sous le plancher.

L'invention a pour objet un véhicule automobile comprenant :
une structure de véhicule automobile comprenant un plancher ; un tunnel central séparant le plancher en deux demi-planchers ; un profilé s'étendant longitudinalement sur un des deux demi-planchers, le long du tunnel central ;
remarquable en ce que le profilé présente une découpe formant une encoche longitudinale le long d'un bord dudit profilé, qui est opposé au tunnel central ; un renfort du profilé s'étend le long de l'encoche longitudinale et est fixé audit profilé et au tunnel central ; un caisson contenant des accumulateurs d'énergie électrique disposé sous le plancher, le caisson étant adjacent à l'encoche longitudinale.

Avantageusement, la structure de véhicule automobile comprend le profilé sur chacun des deux demi-planchers, respectivement.

Selon un mode avantageux de l'invention, le renfort comprend une ou plusieurs tôles avec une première portion, horizontale et fixée contre une face inférieure du profilé, et une deuxième portion, verticale et fixée contre une face intérieure adjacente du tunnel central.

Selon un mode avantageux de l'invention, la première portion du renfort présente un bord longitudinal opposé au tunnel central, présentant un profil creux formant l'encoche.

Selon un mode avantageux de l'invention, le renfort comprend une nervure longitudinale, verticale ou formant avec la verticale une inclinaison de moins de 30°.

Selon un mode avantageux de l'invention, la nervure longitudinale est dirigée vers le bas.

Selon un mode avantageux de l'invention, les tôles du renfort comprennent une première tôle formant la première portion et une deuxième tôle formant la deuxième portion, les première et deuxième tôles comprenant, respectivement, deux bords assemblés l'un contre l'autre suivant une feuille formant la nervure longitudinale.

Selon un mode avantageux de l'invention, le renfort comprend deux extrémités opposées s'étendant longitudinalement au-delà de l'encoche longitudinale.

Selon un mode avantageux de l'invention, l'encoche longitudinale est située totalement sur une moitié avant du plancher.

Selon un mode avantageux de l'invention, la découpe du profilé est une découpe partielle ou totale dans la section transversale dudit profilé.

Avantageusement, le véhicule automobile comprend un support du caisson et des accumulateurs d'énergie électrique, ledit support étant étendu dans un plan horizontal sous ledit caisson et fixé au renfort du profilé.

Les mesures de l'invention sont intéressantes en ce qu'elles permettent de ménager davantage de place sous le plancher, en particulier sous la partie avant du plancher, sous le conducteur et/ou le passager avant, sans interférence avec les poutres et profilés habituellement présents et destinés à distribuer et à en partie absorber l'énergie d'un choc frontal. L'espace ainsi ménagé permet aux batteries de traction d'être disposées directement en vis-à-vis de la face inférieure du plancher et ainsi de limiter l'encombrement vertical vers le bas. La perte de rigidité provoquée par la découpe faite dans le profilé s'étendant longitudinalement le long du tunnel central est compensée par le renfort qui travaille avec le tunnel central. Cela évite au tunnel central de flamber en choc frontal et réduit aussi de manière significative les efforts aux zones de fixation support des batteries de traction.

### Brève description des dessins

[Fig 1] est une vue schématique du dessous d'une structure de véhicule automobile selon l'invention ;
[Fig 2] est une vue en perspective et de détails de la zone de la structure de véhicule automobile de la figure 1 recevant le caisson de batteries de traction.

### Description détaillée

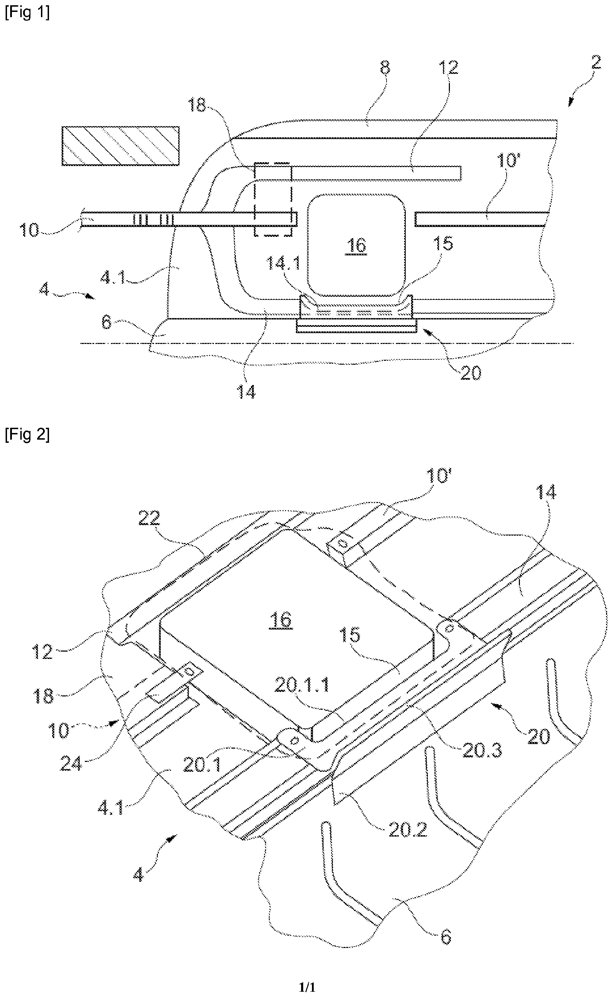

La figure 1 illustre schématiquement le dessous d'une structure de véhicule automobile, conforme à l'invention, plus particulièrement une moitié de la structure de véhicule automobile, étant entendu que l'autre moitié peut être identique par symétrie à celle représentée et détaillée ci-après.

La structure de véhicule automobile 2 comprend, classiquement, un plancher 4, un tunnel central 6 et deux longerons latéraux 8 le long des bords extérieurs du plancher 4. Le tunnel central 6 divise le plancher 4 en deux demi-planchers dont seul le demi-plancher gauche 4.1 est représenté.

Une poutre avant 10, plus couramment désignée brancard par analogie aux brancards d'une civière formant deux poutres longitudinales généralement parallèles et éventuellement profilées verticalement à leurs extrémités, est fixée à l'avant du plancher 4. Plus précisément la poutre avant 10 s'étend depuis un compartiment moteur ou plus généralement un compartiment avant (en l'absence de moteur) où elle supporte une traverse avant de pare-chocs via un caisson déformable en compression (« crashbox »), ces éléments n'étant toutefois pas représentés. De manière connue, la poutre avant 10 peut présenter un profil coudé dans un plan vertical et longitudinal, de manière à évoluer d'une hauteur supérieure dans le compartiment avant ou moteur vers une hauteur inférieure sous le plancher 4. Comme cela est visible à la figure 1, la poutre avant 10 présente un profil rectiligne dans un plan horizontal parallèle au plancher 4 jusqu'à son extrémité arrière sur une partie avant du plancher 4.

Un profilé latéral 12 s'étend longitudinalement sur plancher 4, le long et à distance de longeron latéral 8 adjacent. Aussi et similairement un profilé 14 s'étend longitudinalement sur le plancher 4, essentiellement parallèlement au profilé latéral 12, le long du tunnel central 6. Chacun du profilé latéral 12 et du profilé 14 est avantageusement relié mécaniquement, à son extrémité avant, à la poutre avant 10. Cette configuration est avantageuse en ce qu'elle ménage un espace ou une zone pouvant loger un caisson 16 d'accumulateurs d'énergie électrique ou batteries de traction. Ce caisson peut ainsi être placé directement contre la face inférieure du plancher 4 sans interférence avec un profilé ou une poutre, limitant ainsi l'encombrement vertical vers le bas et ménageant ainsi la garde au sol du véhicule automobile.

Le profilé latéral 12 peut par ailleurs être rigidement lié à l'extrémité arrière de la poutre avant 10 au moyen d'un caisson transversal 18, représenté de manière schématique.

Aussi, une poutre arrière 10', prolongeant vers l'arrière la poutre avant 10, peut être prévue. On peut observer que cette poutre arrière 10' a son extrémité avant à proximité d'une face arrière du caisson 16.

Le profilé 14 s'étendant le long du tunnel central 6 présente une découpe 14.1 longitudinalement au niveau du caisson 16 de batteries de traction, de manière à former une encoche longitudinale 15 apte à recevoir le caisson 16 en question. Cette découpe dans le profilé 14, qui dans la section transversale du profilé 14 peut être partielle ou totale, naturellement déforce le profilé 14 voire le rend inopérant pour reprendre et transmettre vers l'arrière de l'énergie d'un choc frontal. A cet effet, un renfort 20 est fixé au profilé 14 le long de l'encoche longitudinale formée par la découpe 14.1. Le renfort 20 est non seulement fixé au profilé 14, avantageusement de part et d'autre de la découpe 14.1, mais également au tunnel central 6. Ce dernier présente un profil transversal en U avec des parois adjacentes au plancher qui sont généralement perpendiculaires audit plancher. Le fait de s'ancrer sur cette paroi adjacente est particulièrement intéressant dans une logique de compensation de manque de rigidité du profilé 14 suite à la découpe 14.1.

La figure 2 est une vue en perspective et de détail de la zone de la structure de véhicule automobile de la figure 1 recevant le caisson 16 de batteries de traction.

Le renfort 20 est formé d'une ou plusieurs tôles comprenant une première portion 20.1 généralement horizontale et fixée contre le profilé 14, en particulier de part et d'autre de la découpe 14.1. Cette fixation peut également avoir lieu le long de la découpe dès lors que la découpe 14.1 du profilé 14 dans sa section transversale n'est pas totale, c'est-à-dire qu'une partie de la section transversale est restante et permet d'y fixer la première portion 20.1 du renfort 20. Cette fixation se fait avantageusement par soudure, plus particulièrement par des points de soudure par résistance électrique. Le profilé 14 présente avantageusement une section transversale en U avec, aux extrémités du U, deux ailes fixées contre le plancher 4. La fixation de la première portion 20.1 du renfort 14 peut alors être réalisée sur la partie centrale de la section en U du profilé 14.

La première portion 20.1 du renfort 20 présente un bord longitudinal 20.1.1 opposé au tunnel central, avec un profil creux pouvant former l'encoche longitudinale 15.

Le renfort 20 comprend également une deuxième portion 20.2 fixée au tunnel central 6, plus particulièrement contre la face interne dudit tunnel. Similairement à la première portion 20.1, la fixation de la deuxième portion 20.2 au tunnel central 6 se fait avantageusement par soudure, plus particulièrement par des points de soudure par résistance électrique.

Le renfort 20 peut également comprendre une nervure longitudinale 20.3 verticale ou formant avec la verticale une inclinaison de moins de 30°. Cette nervure 20.3 avantageusement dirigée vers le bas, c'est-à-dire à l'opposé de la deuxième portion 20.2, de manière à former une rigidité maximale en flexion dans un plan longitudinal vertical ou du moins proche de la verticale.

Le renfort 20 est avantageusement réalisé à partie de deux tôles assemblées l'une à l'autre, à savoir une première tôle comprenant la première portion 20.1 et une deuxième tôle comprenant la deuxième portion 20.2. Les deux tôles sont assemblées l'une à l'autre au niveau de deux bords superposés suivant une feuille jonction formant la nervure 20.3. Cette fixation peut également être réalisée par soudure, plus particulièrement par des points de soudure par résistance électrique.

Un support 22 du caisson 16 de batteries de traction est représenté de manière schématique par un trait interrompu. Ce support est généralement plan bien que pouvant présenter des nervures ou bossages de raidissement. Il peut être fixé au renfort 20, plus particulièrement à la première portion 20.1 du renfort 20. Il peut également être fixé via une patte 24 sur le caisson transversal 18 et aussi via l'extrémité avant de la poutre arrière 10', prolongeant vers l'arrière la poutre avant 10. Ces différentes zones de fixation sont schématisées par des points à la figure 2. Le profilé latéral 12 peut également servir des zone(s) de fixation du support 22.

Le renfort 20 qui vient d'être détaillé peut prendre d'autres formes ou être réalisé différemment tout en assurant les mêmes fonctions et apportant les mêmes avantages.

## Revendications

1. Véhicule automobile comprenant une structure de véhicule automobile (2) comprenant :
- un plancher (4) ;
- un tunnel central (6) séparant le plancher (4) en deux demi-planchers (4.1) ;
- un profilé (14) s'étendant longitudinalement sur un (4.1) des deux demi-planchers, le long du tunnel central (6) ;
le véhicule comportant en outre un caisson (16) contenant des accumulateurs d'énergie électrique disposé sous le plancher (4), le véhicule étant **caractérise en ce que** le profilé (14) présente une découpe (14.1) formant une encoche longitudinale (15) le long d'un bord dudit profilé, qui est opposé au tunnel central (6) ; et un renfort (20) du profilé (14) s'étend le long de l'encoche longitudinale et est fixé audit profilé (14) et au tunnel central (6), le caisson (16) étant adjacent à l'encoche longitudinale (15).

2. Véhicule selon la revendication 1, dans laquelle le renfort (20) comprend une ou plusieurs tôles avec une première portion (20.1), horizontale et fixée contre une face inférieure du profilé (14), et une deuxième portion (20.2), verticale et fixée contre une face intérieure adjacente du tunnel central (6).

3. Véhicule selon la revendication 2, dans laquelle la première portion (20.1) du renfort (20) présente un bord longitudinal (20.1.1) opposé au tunnel central (6), présentant un profil creux formant l'encoche.

4. Véhicule selon l'une des revendications 1 à 3, dans laquelle le renfort (20) comprend une nervure longitudinale (20.3), verticale ou formant avec la verticale une inclinaison de moins de 30°.

5. Véhicule selon la revendication 4, dans laquelle la nervure longitudinale (20.3) est dirigée vers le bas.

6. Véhicule, selon l'une des revendications 2 et 3, et selon l'une des revendications 4 et 5, dans laquelle les tôles du renfort (20) comprennent une première tôle formant la première portion (20.1) et une deuxième tôle formant la deuxième portion (20.2), les première et deuxième tôles comprenant, respectivement, deux bords assemblés l'un contre l'autre suivant une feuille formant la nervure longitudinale (20.3).

7. Véhicule selon l'une des revendications 1 à 6, dans laquelle le renfort (20) comprend deux extrémités opposées s'étendant longitudinalement au-delà de l'encoche longitudinale (15).

8. Véhicule selon l'une des revendications 1 à 7, dans laquelle l'encoche longitudinale est située totalement sur une moitié avant du plancher (4).

9. Véhicule selon l'une des revendications 1 à 8, dans laquelle la découpe (14.1) du profilé (14) est une découpe partielle ou totale dans la section transversale dudit profilé.

## Patentansprüche

1. Kraftfahrzeug mit einer Kraftfahrzeugstruktur (2), die Folgendes umfasst:
- ein Fußboden (4);
- einen zentralen Tunnel (6), der den Boden (4) in zwei halbe Böden (4.1) trennt;
- ein Profil (14), das sich in Längsrichtung über einen (4.1) der beiden Halbböden entlang des Mitteltunnels (6) erstreckt;
Das Fahrzeug umfasst ferner einen Kasten (16), der elektrische Energiespeicher enthält, die unter dem Boden (4) angeordnet sind, wobei das Fahrzeug **dadurch gekennzeichnet ist, dass** das Profil (14) einen Ausschnitt (14.1) aufweist, der eine Längsnut (15) entlang einer Kante des Profils bildet, die dem zentralen Tunnel (6) gegenüberliegt; und dass sich eine Verstärkung (20) des Profils (14) entlang der Längsnut erstreckt und an dem Profil (14) und dem zentralen Tunnel (6) befestigt ist, wobei der Kasten (16) benachbart ist Längskerbe (15).

2. Fahrzeug nach Anspruch 1, wobei die Verstärkung (20) ein oder mehrere Bleche mit einem ersten Abschnitt (20.1), der horizontal und an einer Unterseite des Profils (14) befestigt ist, und einem zweiten Abschnitt (20.2), der vertikal und an einer benachbarten Innenseite des zentralen Tunnels (6) befestigt ist, umfasst.

3. Fahrzeug nach Anspruch 2, wobei der erste Abschnitt (20.1) der Verstärkung (20) eine Längskante (20.1.1) gegenüber dem zentralen Tunnel (6) aufweist, die ein hohles Profil aufweist, das die Kerbe bildet.

4. Fahrzeug nach einem der Ansprüche 1 bis 3, wobei die Verstärkung (20) eine Längsrippe (20.3) umfasst, die vertikal ist oder mit der Vertikalen eine Neigung von weniger als 30° bildet.

5. Fahrzeug nach Anspruch 4, wobei die Längsrippe (20.3) nach unten gerichtet ist.

6. Fahrzeug nach einem der Ansprüche 2 und 3 und nach einem der Ansprüche 4 und 5, bei dem die Bleche der Verstärkung (20) ein erstes Blech, das den ersten Abschnitt (20.1) bildet, und ein zweites Blech, das den zweiten Abschnitt (20.2) bildet, umfassen, wobei das erste und das zweite Blech jeweils zwei Kanten umfassen, die in einer die Längsrippe (20.3) bildenden Folie aneinander befestigt sind.

7. Fahrzeug nach einem der Ansprüche 1 bis 6, bei dem die Verstärkung (20) zwei gegenüberliegende Enden aufweist, die sich in Längsrichtung über die Längsnut (15) hinaus erstrecken.

8. Fahrzeug nach einem der Ansprüche 1 bis 7, bei dem die Längsnut vollständig auf einer vorderen Hälfte des Bodens (4) angeordnet ist.

9. Fahrzeug nach einem der Ansprüche 1 bis 8, bei dem der Ausschnitt (14.1) des Profils (14) ein teilweiser oder vollständiger Ausschnitt im Querschnitt des Profils ist.

## Claims

1. Motor vehicle comprising a motor vehicle structure (2) comprising:
- a floor (4);
- a central tunnel (6) separating the floor (4) into two half-floors (4.1);
- a profile (14) extending longitudinally over one (4.1) of the two half-floors, along the central tunnel (6);
the vehicle further comprising a box (16) containing electrical energy accumulators arranged under the floor (4), the vehicle being **characterised in that** the profile (14) has a cut-out (14.1) forming a longitudinal notch (15) along an edge of said profile, which is opposite the central tunnel (6); and a reinforcement (20) of the profile (14) extends along the longitudinal notch and is fixed to said profile (14) and to the central tunnel (6), the box (16) being adjacent to the longitudinal notch (15)

2. Vehicle according to claim 1, in which the reinforcement (20) comprises one or more metal sheets with a first portion (20.1), horizontal and fixed against a lower face of the section (14), and a second portion (20.2), vertical and fixed against an adjacent inner face of the central tunnel (6).

3. Vehicle according to Claim 2, in which the first portion (20.1) of the reinforcement (20) has a longitudinal edge (20.1.1) opposite the central tunnel (6), having a hollow profile forming the notch.

4. Vehicle according to one of Claims 1 to 3, in which the reinforcement (20) comprises a longitudinal rib (20.3), vertical or forming with the vertical an inclination of less than 30°.

5. Vehicle according to Claim 4, in which the longitudinal rib (20.3) is directed downwards.

6. Vehicle, according to one of Claims 2 and 3, and according to one of Claims 4 and 5, in which the reinforcement sheets (20) comprise a first sheet forming the first portion (20.1) and a second sheet forming the second portion (20.2), the first and second sheets comprising, respectively, two edges assembled one against the other along a sheet forming the longitudinal rib (20.3).

7. Vehicle according to one of Claims 1 to 6, in which the reinforcement (20) comprises two opposite ends extending longitudinally beyond the longitudinal notch (15).

8. Vehicle according to one of Claims 1 to 7, in which the longitudinal notch is situated entirely on a front half of the floor (4).

9. Vehicle according to one of Claims 1 to 8, in which the cut-out (14.1) of the section (14) is a partial or total cut-out in the cross section of the said section.
